(19) Europäisches Patentamt
European Patent Office
Office européen des brevets

(11) EP 1 975 270 A1

(12) EUROPEAN PATENT APPLICATION

(43) Date of publication:
01.10.2008 Bulletin 2008/40

(51) Int Cl.:
C22C 38/54 (2006.01)        C22C 38/58 (2006.01)
C21D 6/00 (2006.01)

(21) Application number: 08006557.6

(22) Date of filing: 31.03.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 31.03.2007  JP 2007095799
18.01.2008  JP 2008008886

(71) Applicant: Daido Tokushuko Kabushiki Kaisha
Higashi-ku
Nagoya
Aichi (JP)

(72) Inventors:
• Eto, Hisao
Minami-ku
Nagoya-shi
Aichi 457-8545 (JP)
• Shimizu, Tetsuya
Minami-ku
Nagoya-shi
Aichi 457-8545 (JP)

(74) Representative: Diehl & Partner
Patentanwälte
Augustenstrasse 46
80333 München (DE)

(54) **Austenitic free cutting stainless steel**

(57)    The present invention relates to an austenitic free-cutting stainless steel, containing: by weight percent, 0.500% or less of C; 0.01 to 5.00% of Si; 0.01 to 10.00% of Mn; 5.00 to 25.00% of Ni; 7.50 to 30.00% of Cr; 0.300% or less of N; more than 0.0100% but not more than 0.1000% of 0; 0.0020 to 0.1000% of B; 0.300% or less of Al; and the remainder of Fe and inevitable impurities, the steel satisfying the following formula (1):

$$0.68 \le [O]/[B] \le 2.50 \quad \cdots \quad (1)$$

in which [O] represents the content of O and [B] represents the content of B.

## Description

### FIELD OF THE INVENTION

The invention relates to an austenitic free-cutting stainless steel.

### BACKGROUND OF THE INVENTION

Since an austenitic stainless steel contains relatively large amount of alloy elements such as Cr or Ni, the raw material itself is expensive in comparison with that of an ordinary steel. Accordingly, in order to reduce the production cost of the entire member, it is important to improve the workability. So far, in the applications where the free-cutting property is required, a free-cutting stainless steel (such as SUS303) containing a machinability-improving element such as Pb or S has been used.

However, Pb, which is a typical free-cutting element, is not preferred to be add in steel materials from the viewpoint of the recent environmental concerns. Furthermore, S, which is a free-cutting element, forms a sulfide such as MnS in the steel and improves the machinability. However, since a large amount of sulfide deteriorates the corrosion resistance that is the greatest characteristic of the stainless steel, the addition amount thereof is limited. Still furthermore, an addition of various kinds of free-cutting elements deteriorates the hot workability in some cases.

In this connection, in order to overcome the above-mentioned problems, various proposals have been made.

For instance, JP-A-62-278252 discloses an austenitic stainless steel that contains, by weight percent, C: 0.01 to 0.15%, Si: 0.35 to 0.73%, Mn: 0.15 to 9.53%, P: 0.011 to 0.025%, S: 0.002 to 0.024%, Cr: 10.32 to 30.00%, Ni: 4.98 to 30.00%, Bi: 0.02 to 0.20%, Sn: 0.02 to 0.21%, B: 0.0040 to 0.0200%, 0: 0.0047 to 0.0100%, N: 0.02 to 0.07%, and the remainder of Fe and inevitable impurities.

This literature describes that the deterioration of the hot workability due to the addition of Bi and Sn in combination which are added for improving the machinability can be inhibited by the addition of B, and that O is a harmful element to the hot workability.

Furthermore, JP-A-62-30860 discloses a Bi-containing austenitic free-cutting stainless steel that contains, by weight percent, C: 0.01 to 0.16%, Si: 0.28 to 0.75%, Mn: 0.75 to 9.05%, Cr: 15.25 to 26.40%, Ni: 2.00 to 30.00%, Bi: 0.02 to 0.30%, B: 0.021 to 0.080%, S: 0.004 to 0.050%, P: 0.015 to 0.050%, N: 0.022 to 0.051%, O: 0.0016 to 0.0065%, and the remainder being Fe and inevitable impurities.

In this literature, it is disclosed that an addition of Bi may improve the machinability and the deterioration of the hot workability due to the addition of Bi can be inhibited by the addition of B.

The free-cutting effect of an free-cutting element, Pb, means a liquid metal induced embrittlement. When a cutting portion is heated to a high temperature during the cutting of steel, Pb that is a low melting metal (melting temperature: 330°C) melts. The molten Pb makes a work brittle to thereby improve the machinability.

As a non-Pb free-cutting steel, various Pb-free steels have been developed. However, all of such reports describe that a machinability equivalent to that of a Pb-containing free cutting steel may be realized "under some cutting conditions". A free-cutting element that may substitute a free-cutting effect (liquid metal induced embrittlement) equivalent to that of a free-cutting element Pb, except for Bi that is scarce in source, has not been reported yet.

### SUMMARY OF THE INVENTION .

A problem that the invention intends to solve is to provide an austenitic free-cutting stainless steel which, without deteriorating the corrosion resistance, has a machinability equivalent to that of a Pb-containing free cutting steel.

In order to overcome the problems, the present invention provides the following (1) to (13).

(1) An austenitic free-cutting stainless steel, comprising:

by weight percent,
0.500% or less of C;
0.01 to 5.00% of Si;
0.01 to 10.00% of Mn;
5.00 to 25.00% of Ni;
7.50 to 30.00% of Cr;
0.300% or less ofN;
more than 0.0100% but not more than 0.1000% of O;
0.0020 to 0.1000% of B;
0.300% or less of Al; and

the remainder of Fe and inevitable impurities,
said steel satisfying the following formula (1):

$$0.68 \leq [O]/[B] \leq 2.50 \qquad (1)$$

wherein [O] represents the content of O and [B] represents the content ofB.

(2) The austenitic free-cutting stainless steel according to (1), which comprises an oxide-based inclusion containing B dispersed therein.

(3) The austenitic free-cutting stainless steel according to (2), wherein the oxide-based inclusion further contains Si.

(4) The austenitic free-cutting stainless steel according to any one of (1) to (3), wherein, by weight percent,

0.100% or less of C,
0.01 to 3.00% of Si,
15.00 to 25.00% of Cr,
0.100 or less of N,
more than 0.0100% but not more than 0.0500% of O, and
0.0080 to 0.1000% of B
are contained in said steel.

(5) The austenitic free-cutting stainless steel according to any one of (1) to (4), wherein, by weight percent,

0.050% or less of N,
more than 0.0100% but not more than 0.0500% of O, and
0.0120 to 0.0800% of B
are contained in said steel.

(6) The austenitic free-cutting stainless steel according to any one of (1) to (5), further comprising:

at least one kind selected from the group consisting of a sulfide, a nitride, a carbosulfide and a selenide.

(7) The austenitic free-cutting stainless steel according to any one of (1) to (6), further comprising:

by weight percent,
at least one kind selected from the group consisting of
0.01 to 0.50% of S, and
0.01 to 0.50% of Se.

(8) The austenitic free-cutting stainless steel according to any one of (1) to (7), further comprising:

by weight percent,
at least one kind selected from the group consisting of
0.01 to 0.40% of Pb,
0.01 to 0.40% ofBi,
0.01 to 0.40% of Te,
0.01 to 0.40% of Sn, and
0.01 to 0.40% of P.

(9) The austenitic free-cutting stainless steel according to any one of (1) to (8), further comprising:

by weight percent,
at least one kind selected from the group consisting of
0.01 to 8.00% of Mo,
0.01 to 4.00% of W, and
0.01 to 5.00% of Cu.

(10) The austenitic free-cutting stainless steel according to any one of (1) to (9), further comprising:

by weight percent,
at least one kind selected from the group consisting of
0.01 to 2.00% of Ti,
0.01 to 2.00% of V,
0.01 to 2.00% ofNb, and
0.01 to 2.00% of Zr.

(11) The austenitic free-cutting stainless steel according to any one of claims 1 to 10, further comprising:

by weight percent,
at least one kind selected from the group consisting of
0.0001 to 0.0100% of Mg, and
0.0001 to 0.0100% of Ca.

(12) The austenitic free-cutting stainless steel according to any one of (1) to (11), which is obtained by a heat treatment conducted at a temperature in the range of 1000 to 1300°C for a period of 5 min to 24 hr.
(13) A process for producing an austenitic free-cutting stainless steel, which comprises:

preparing a steel comprising:

by weight percent,
0.500% or less of C,
0.01 to 5.00% of Si,
0.01 to 10.00% of Mn,
5.00 to 25.00% of Ni,
7.50 to 30.00% of Cr,
0.300% or less ofN,
more than 0.0100% but not more than 0.1000% of O,
0.0020 to 0.1000% of B,
0.300% or less of Al, and
the remainder of Fe and inevitable impurities,
said steel satisfying the following formula (1):

$$0.68 \le [O]/[B] \le 2.50 \qquad (1)$$

wherein [0] represents the content of O and [B] represents the content of B;
melting and casting the steel; and
subjecting the steel to a heat treatment conducted at a temperature in the range of 1000 to 1300°C for a period of 5 min to 24 hr.

When a specific amount or more of 0 that has been conventionally said detrimental to the hot workability is added to an austenitic stainless steel containing a specific amount ofB and a heat treatment at a predetermined temperature is applied to the steel, high machinability can be obtained even in the case that conventionally known free-cutting elements such as S, Pb, Se and Te are not contained in the steel. This is considered because, when a relatively large amount of O is contained, an oxide ofB, which is a low melt oxide (melting temperature: 480°C), or a composite oxide containing B is dispersed in the steel to thereby develop a liquid metal induced embrittlement during the cutting.

**BRIEF DESCRIPTION OF THE DRAWINGS**

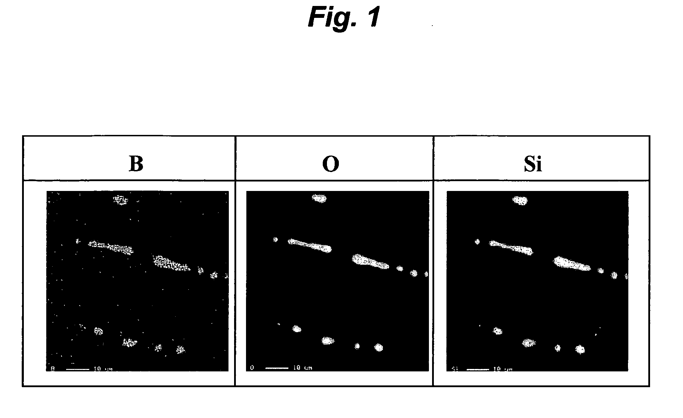

Fig. 1 shows an EPMA analysis result of an inclusion contained in the material obtained in example 1.

## BEST MODE FOR CARRYING OUT THE INVENTION

In what follows, one embodiment of the invention will be described in detail.

The austenitic free-cutting stainless steel according to the invention includes elements shown below and the remainder of Fe and inevitable impurities. The types of the addition elements, the component ratios thereof, the reason for limitation thereof, and the like are as follows. Herein, in the present specification, all the percentages defined by weight are the same as those defined by mass, respectively.

(1) C: 0.500% by weight or less

An element C is an austenite-generating element and contributes to stabilize an austenite phase. Furthermore, since C is an interstitial element, it contributes to the improvement in mechanical strength. On the other hand, when a content of C is excessive, Cr carbide is formed to decrease the dissolved Cr in a mother phase, whereby the corrosion resistance is deteriorated. Accordingly, the content of C is preferably 0.500% by weight or less. The content of C is more preferably 0.100% by weight or less. Preferably, C is contained in at least 0.002%, more preferably in more than 0:001 %.

(2) Si: 0.01 to 5.00% by weight

An element Si is added as a deoxidizer. In order to attain a sufficient deoxidizing effect, the content of Si is preferably 0.01% by weight or more.

On the other hand, since Si is a ferrite-generating element, an excessive addition therof destabilizes an austenite phase. Furthermore, Si promotes precipitation of a σ-phase to thereby deteriorate the corrosion resistance. Accordingly, the content of Si is preferably 5.00% by weight or less. The content of Si is more preferably 3.00% by weight or less.

(3) Mn: 0.01 to 10.00% by weight

An element Mn is an austenite-generating element and contributes to stabilize an austenite phase. In order to attain such an effect, the content of Mn is preferably 0.01 % by weight or more.

On the other hand, when Mn is excessively contained, the pitting corrosion resistance of the steel is deteriorated. Accordignly, the content of Mn is preferably 10.0 % by weight or less.

(4) Ni: 5.00 to 25.00% by weight

An element Ni is an austenite-generating element and contributes to stabilize an austenite phase. In order to attain such an effect, the content of Ni is preferably 5.00% by weight or more.

On the other hand, when Ni is added excessively, the precipitation of a a-phase is promoted to thereby deteriorate the corrosion resistance. Accordingly, an additional amount ofNi is preferably 25.00% by weight or less.

(5) Cr: 7.5 to 30.00% by weight

An element Cr is an important element that greatly contributes to the improvement in the corrosion resistance and the mechanical strength. In order to attain such an effect, the content of Cr is preferably 7.50% by weight or more. The content of Cr is more preferably 15.00% by weight or more.

On the other hand, an excessive addition of Cr increases a residual amount of an undissolved Cr carbonite during the solution treatment, to thereby considerably deteriorate the corrosion resistance. Accordingly, the amount of Cr is preferably 30.0% by weight or less. The content of Cr is more preferably 25.00% by weight or less.

(6) N: 0.300% by weight or less

An element N is an interstitial element and is significantly effective for improving the mechanical strength, stabilizing an austenite phase, and improving the corrosion resistance. On the other hand, when N is added excessively, a large amount of an undissolved Cr nitride and a large amount of a nitride remain in the steel during the solution treatment, to thereby considerably deteriorate the corrosion resistance. Accordingly, the content ofN is preferably 0.300% by weight or less. The content ofN is more preferably 0.100% by weight or less and still more preferably 0.050% by weight or less. Preferably, N is contained in at least 0.002%, more preferably more than 0.001 % by weight.

(7) O: more than 0.0100% by weight but not more than 0.1000% by weight

An element 0 is generally said to deteriorate the cleanness of steel to thereby considerably deteriorate the corrosion resistance and the hot workability. However, when B is added to an austenitic stainless steel and a specific amount or more of 0 is further added thereto, the free cutting property equivalent to that of Pb-containing free cutting steel can be obtained without the necessity of adding a conventionally known free-cutting element. In order to attain such an effect, the content of O is preferably more than 0.0100% by weight. More preferably, the content of O is more than 0.0200% by weight.

On the other hand, when O is added excessively, the corrosion resistance and the hot workability are deteriorated. Accordingly, the content of O is preferably 0.1000% by weight or less. The content of O is more preferably 0.0500% by weight or less.

(8) B: 0.0020 to 0.1000% by weight

An element B is generally said to be effective for improving the mechanical strength and the hot workability. However, when B is not dissolved in the matrix but dispersed in the steel as an oxide-based inclusion containing B, the machinability is improved. In order to attain such an effect, the content of B is preferably 0.0020% by weight or more. The content of B is more preferably 0.0080% by weight or more and still more preferably 0.0120% by weight or more.

On the other hand, when B is excessively added, the hot workability is deteriorated as well as the corrosion resistance is also deteriorated. Accordingly, the content of B is preferably 0.1000% by weight or less. The content of B is more preferably 0.0800% by weight or less.

(9) Al: 0.300% by weight or less

An element Al is an oxide-forming element. When Al is added excessively, $Al_2O_3$ is preferentially generated to make it difficult to form an oxide containing B that improves the machinability in the invention. Accordingly, the content of Al is preferably 0.300% by weight or less. Preferably, Al is contained in at least 0.001% by weight.

(10) [o]/[B] ratio

In the invention, in order to improve the free cutting property, an oxide-based inclusion containing B is dispersed in the steel. The invention is different from conventional free-cutting stainless steels in this respect.

In order to attain practically sufficient free cutting effect, a ratio of a content of O ([O]) to a content of B ([B]) preferably satisfies the following formula (1).

$$0.68 \le [O]/[B] \le 2.50 \quad \cdots \quad (1)$$

When the ratio of [O]/[B] is too small, since the amount of O is relatively small, a sufficient amount of oxide-based inclusion may not be dispersed in the steel. Accordingly, the ratio of [O]/[B] is preferably 0.68 or more.

On the other hand, when the ratio of [O]/[B] is too large, the amount of O becomes excessive to thereby cause deterioration of the corrosion resistance and the hot workability. Accordingly, the ratio of [O]/[B] is preferably 2.50 or less.

The austenitic free-cutting stainless steel according to the invention is obtained, as will be described below, by melting and casting a steel having a predetermined composition, followed by subjecting the steel to a heat treatment conducted under predetermined conditions. When the steel is heat-treated under predetermined conditions, B which is contained in the steel can be entirely or partially dispersed in the steel as an oxide-based inclusion containing B. In order to attain high machinability, an oxide-based inclusion preferably further contains Si. The machinability is improved by the coexistence of B and Si. This is considered because B is dissolved in the oxide having a silicate structure formed by $SiO_2$ to thereby form a borosilicate oxide, and the borosilicate oxide is dispersed in the steel.

In general, the more the oxide-based inclusion containing B is contained, the more the machinability is improved. In order to attain high machinability, an area ratio of the oxide-based inclusion containing B is preferably 0.01% or more.

On the other hand, when an amount of the oxide-based inclusion is excessive, the hot workability and the corrosion resistance are deteriorated. Accordingly, an area ratio of the oxide-based inclusion containing B is preferably 0.10% or less.

Furthermore, in the steel, an inclusion other than the oxide-based inclusion containing B is present as well. Such an oxide other than the oxide-based inclusion containing B does not contribute to an improvement in the machinability. Accordingly, a ratio of the oxide-based inclusion containing B in the entire oxides is preferably 50% or more.

In the austenitic free-cutting stainless steel according to the invention, the machinability is improved by dispersing the oxide-based inclusion containing B in the steel. The austenitic free-cutting stainless steel may contain only the oxide-based inclusion containing B, or may contain, in addition to the oxide-based inclusion containing B, a conventional free-cutting element (that is, at least any one of a sulfide, a nitride, a carbosulfide and a selenide, which are effective for improving the machinability) as well.

That is, the austenitic free-cutting stainless steel according to the invention may further contain, in addition to the foregoing elements, at least one element selected from the group consisting of S and Se (first additional element).

(11) S: 0.01 to 0.50% by weight

An element S forms MnS with Mn in the steel to thereby improve the machinability effectively. In order to attain such an effect, the content of S is preferably 0.01% by weight or more.

On the other hand, when S is added excessively, the hot workability is deteriorated and, due to the formation of MnS, the corrosion resistance is also deteriorated. Furthermore, when the amount of S is unnecessarily reduced, the production cost becomes increased. Accordingly, the content of S is preferably 0.50% by weight or less.

(12) Se: 0.01 to 0.50% by weight

An element Se also contributes to improve the machinability. In order to attain such an effect, the content of Se is preferably 0.01% by weight or more.

On the other hand, when Se is added excessively, the corrosion resistance, the toughness and ductility, and the hot workability are deteriorated. Accordingly, the content of Se is preferably 0.50% by weight or less.

Furthermore, the austenitic free-cutting stainless steel according to the invention may contain, in addition to the first additional elements or in place thereof, at least one element selected from the group consisting of Pb, Bi, Te, Sn and P (second additional element).

(13) Pb: 0.01 to 0.40% by weight

(14) Bi: 0.01 to 0.40% by weight

(15) Te: 0.01 to 0.40% by weight

(16) Sn: 0.01 to 0.40% by weight

(17) P: 0.01 to 0.40% by weight

All of Pb, Bi, Te, Sn and P have an effect for improving the machinability. In order to attain such an effect, the content of each element is preferably 0.01% by weight or more.

On the other hand, when these elements each are added excessively, the toughness is deteriorated. Accordingly, an addition amount of each element is preferably 0.40% by weight or less.

Furthermore, an austenitic free-cutting stainless steel according to the invention may contain, in addition to the first additional elements and/or second additional elements, or in place thereof, at least one element selected from the group consisting of Mo, W and Cu (third additional element).

(18) Mo: 0.01 to 8.00% by weight

An element Mo considerably improves the corrosion resistance. Furthermore, Mo improves the mechanical strength as a solid solution hardening element. In order to attain such an effect, the content ofMo is preferably 0.01% by weight or more.

On the other hand, when Mo is added excessively, since a brittle phase is generated to deteriorate the toughness and ductility, which also becomes harmful during the forging. Accordingly, the content of Mo is preferably 8.00% by weight or less.

(19) W: 0.01 to 4.00% by weight

Similar to Mo, an element W contributes to the improvement in the corrosion resistance as well as the improvement in the mechanical strength as a solid solution hardening element. In order to attain such an effect, the content of W is preferably at 0. 01 % by weight or more.

On the other hand, similar to Mo, when W is added excessively, since a brittle phase is generated to deteriorate the toughness and ductility, which also becomes harmful during the forging. Accordingly, the content of W is preferably 4.00% by weight or less.

(20) Cu: 0.01 to 5.00% by weight

An element Cu is an austenite-generating element and contributes to stabilize an austenite phase. Furthermore, Cu contributes to improve the gap corrosion resistance. In order to attain such an effect, the content of Cu is preferably 0.01% by weight or more.

On the other hand, when Cu is added excessively, the hot workability is deteriorated. Accordingly, the content of Cu is preferably 5.00% by weight or less.

Furthermore, an austenitic free-cutting stainless steel according to the invention may contain, in addition to at least one of the first through third additional elements, or in place thereof, at least one element selected from the group consisting of Ti, V, Nb and Zr (fourth addition element).

(21) Ti: 0.01 to 2.00% by weight

An element Ti binds with C or N to thereby contribute to the improvement in the mechanical strength and the miniaturization of crystal grains. In order to attain such an effect, the content of Ti is preferably 0.01% by weight or more.

On the other hand, when Ti is added excessively, large amounts of oxide and nitride remain in the steel to thereby deteriorate the corrosion resistance. Accordingly, the content of Ti is preferably 2.00% by weight or less.

(22) V: 0.01 to 2.00% by weight

Similar to Ti, an element V binds with C or N to thereby contribute to the improvement in the mechanical strength and miniaturization of crystal grains. In order to attain such an effect, the content of V is preferably 0.01% by weight or more.

On the other hand, when V is added excessively, a large amount of nitride remains in the steel to thereby deteriorate the corrosion resistance. Accordingly, the content of V is preferably 2.00% by weight or less.

(23) Nb: 0.01 to 2.00% by weight

Similar to Ti and V, an element Nb binds with C or N to thereby contribute to the improvement in the mechanical strength and miniaturization of crystal grains. In order to attain such an effect, the content of Nb is preferably 0.01% by weight or more.

On the other hand, when Nb is added excessively, a large amount of nitride remains in the steel to thereby deteriorate the corrosion resistance. Accordingly, the content of Nb is preferably 2.00% by weight or less.

(24) Zr: 0.01 to 2.00% by weight

An element Zr contributes to the improvement in the mechanical strength. In order to attain such an effect, the content of Zr is preferably 0.01% by weight or more.

On the other hand, when Zr is added excessively, the toughness and ductility are deteriorated. Accordingly, the content of Zr is preferably 2.00% by weight or less.

Furthermore, an austenitic free-cutting stainless steel according to the invention may contain, in addition to at least one of the first through fourth additional elements, or in place thereof, at least one element selected from the group consisting of Mg and Ca (fifth additional element).

(25) Mg: 0.0001 to 0.0100% by weight

(26) Ca: 0.0001 to 0.0100% by weight

Elements Mg and Ca are effective for improving the hot workability. Furthermore, Ca is also effective for improving the machinability. This is considered because Ca has an action of enabling an oxide having a silicate structure which contributes to the improvement in the machinability to be present more stably in the steel. In order to attain such an effect, the content of each of Mg and Ca is preferably 0.0001% by weight or more.

On the other hand, when these elements are added excessively, contrary to the above, the hot workability is deteriorated. Accordingly, the content of each thereof is preferably 0.0100% by weight or less.

In this regard, with regard to each element contained in the steel of the invention, according to an embodiment, the minimal amount thereof present in the steel is the smallest non-zero amount used in the Examples of the developed steels as summarized in Tables 1 and 2. According to a further embodiment, the maximum amount thereof present in the steel is the maximum amount used in the Examples of the developed steels as summarized in Tables 1 and 2.

In the next place, a producing method of the austenitic free-cutting stainless steel according to the invention will be described.

The austenitic free-cutting stainless steel according to the invention is obtained by melting and casting the steel having the above-mentioned composition, followed by subjecting the steel to a heat-treatment under predetermined conditions. When the steel is subjected to a heat-treatment under predetermined conditions, B contained in the steel is entirely or partially dispersed in the steel as an oxide-based inclusion containing B. In order to attain high machinability, an oxide-based inclusion may preferably further contain Si.

In general, when the heat treatment temperature is too low, an oxide-based inclusion containing B cannot be generated in the steel. In order to generate an oxide-based inclusion containing B, the heat treatment temperature is preferably at 1000°C or more. The heat treatment temperature is more preferably at 1150°C or more.

Furthermore, in general, the higher the heat treatment temperature becomes, the easier the oxide-based inclusion containing B tends to be formed. However, when the heat treatment temperature is too high, local melting occurs to unfavorably result in a material having an inhomogeneous composition. Accordingly, the heat treatment temperature is preferably at 1300°C or less. The heat treatment temperature is more preferably at 1250°C or less.

Still furthermore, the heat treatment period affects on an amount of the oxide-based inclusion containing B. In general, the longer the heat treatment period is, the larger the amount of the oxide-based inclusion containing B becomes. In order to generate a practically sufficient amount of the oxide-based inclusion containing B, the heat treatment period is preferably in the range of 5 min to 24 hr. The heat treatment time is more preferably in the range of 5 min to 4 hr.

In the next place, actions of the austenitic free-cutting stainless steel according to the invention will be described.

When a specific amount or more of O that has been conventionally said detrimental to the hot workability is added to an austenitic stainless steel containing a specific amount of B and a heat treatment at a predetermined temperature is applied to the steel, high machinability can be obtained even in the case that conventionally known free-cutting elements such as S, Pb, Se and Te are not contained in the steel. This is considered because, when a relatively large amount of O is contained, an oxide of B, which is a low melt oxide (melting temperature: 480°C), or a composite oxide containing B is dispersed in the steel to thereby develop a liquid metal induced embrittlement during the cutting.

Furthermore, when Si is further contained in an oxide-based inclusion in addition to B, high machinability can be obtained. This is considered because, when Si is contained in the oxide-based inclusion, a liquid phase mainly made of a borosilicate oxide is readily formed during the cutting.

Still furthermore, the austenitic free-cutting stainless steel according to the invention is relatively less in the tool wear. This is considered because a depostion of an oxide containing B (so-called, belag) tends to be readily generated on a surface of a tool.

Examples

Examples 1 to 42 and Comparative Examples 1 to 13

By the use of a high frequency induction furnace, each of alloys having a chemical composition shown in Tables 1 and 2 was melted and cast to obtain 50 kg of an ingot. In the next place, the ingot was uniformly heated, followed by hot forging into a round bar having a diameter of 24 mm. The round bar thus obtained was then subjected to a heat treatment. The heat treatment was conducted by holding the bar at 1150°C for 1 hr followed by cooling with water.

Table 1

|  | Composition (% by weight) | | | | | | | | | | |
|  | C | Si | Mn | Ni | Cr | N | Al | O | B | Others | [O]/[B] |
|---|---|---|---|---|---|---|---|---|---|---|---|
| Example 1 | 0.011 | 0.29 | 0.85 | 9.5 | 17.5 | 0.021 | 0.001 | 0.0215 | 0.014 |  | 1.54 |
| Example 2 | 0.010 | 0.82 | 1.21 | 9.4 | 17.7 | 0.014 | 0.002 | 0.0250 | 0.016 |  | 1.56 |
| Example 3 | 0.035 | 0.52 | 0.11 | 7.8 | 17.3 | 0.022 | 0.001 | 0.0188 | 0.021 |  | 0.90 |
| Example 4 | 0.005 | 1.42 | 1.16 | 9.8 | 18.4 | 0.011 | 0.001 | 0.0231 | 0.029 |  | 0.80 |
| Example 5 | 0.018 | 0.66 | 1.52 | 8.9 | 18.7 | 0.006 | 0.004 | 0.0102 | 0.007 |  | 1.46 |
| Example 6 | 0.068 | 1.17 | 0.47 | 9.5 | 19.3 | 0.043 | 0.005 | 0.0224 | 0.022 |  | 1.02 |

(continued)

| | Composition (% by weight) | | | | | | | | | | |
|---|---|---|---|---|---|---|---|---|---|---|---|
| | C | Si | Mn | Ni | Cr | N | Al | O | B | Others | [O]/[B] |
| Example 7 | 0.033 | 1.40 | 0.27 | 8.7 | 19.2 | 0.018 | 0.003 | 0.0273 | 0.016 | | 1.71 |
| Example 8 | 0.054 | 1.06 | 0.87 | 10.1 | 17.7 | 0.021 | 0.002 | 0.0125 | 0.007 | | 1.79 |
| Example 9 | 0.016 | 0.74 | 0.44 | 7.9 | 17.6 | 0.016 | 0.001 | 0.0216 | 0.009 | S: 0.06 | 2.40 |
| Example 10 | 0.022 | 0.53 | 1.19 | 9.4 | 18.5 | 0.021 | 0.001 | 0.0253 | 0.019 | S: 0.31 | 1.33 |
| Example 11 | 0.066 | 0.26 | 0.29 | 10.3 | 18.7 | 0.023 | 0.009 | 0.0206 | 0.011 | S: 0.48 | 1.87 |
| Example 12 | 0.005 | 0.13 | 1.19 | 9.7 | 17.9 | 0.011 | 0.011 | 0.0213 | 0.021 | Se: 0.07 | 1.01 |
| Example 13 | 0.025 | 0.29 | 0.58 | 9.3 | 16.9 | 0.009 | 0.001 | 0.0196 | 0.016 | Se: 0.43 | 1.23 |
| Example 14 | 0.002 | 0.08 | 1.87 | 10.3 | 15.3 | 0.008 | 0.002 | 0.0163 | 0.018 | Pb: 0.04 | 0.91 |
| Example 15 | 0.044 | 0.09 | 1.45 | 12.6 | 19.3 | 0.011 | 0.002 | 0.0253 | 0.029 | Pb: 0.31 | 0.87 |
| Example 16 | 0.019 | 0.12 | 0.03 | 16.2 | 18.3 | 0.009 | 0.001 | 0.0195 | 0.028 | Bi: 0.11 | 0.70 |
| Example 17 | 0.014 | 0.44 | 0.54 | 11.8 | 17.4 | 0.005 | 0.002 | 0.0228 | 0.011 | Bi: 0.34 | 2.07 |
| Example 18 | 0.031 | 0.99 | 0.29 | 9.2 | 16.9 | 0.016 | 0.001 | 0.0218 | 0.015 | Te: 0.09 | 1.45 |
| Example 19 | 0.022 | 1.42 | 0.65 | 8.4 | 13.2 | 0.021 | 0.043 | 0.0257 | 0.019 | Te: 0.33 | 1.35 |
| Example 20 | 0.006 | 4.32 | 0.85 | 7.2 | 16.1 | 0.015 | 0.055 | 0.0241 | 0.011 | Sn: 0.02 | 2.19 |
| Example 21 | 0.036 | 0.89 | 0.39 | 19.4 | 11.2 | 0.018 | 0.001 | 0.0281 | 0.031 | Sn: 0.39 | 0.91 |
| Example 22 | 0.006 | 3.83 | 2.65 | 23.2 | 9.2 | 0.011 | 0.002 | 0.0246 | 0.024 | P: 0.02 | 1.03 |
| Example 23 | 0.009 | 0.68 | 1.20 | 9.6 | 17.3 | 0.011 | 0.001 | 0.0210 | 0.011 | P: 0.12 | 1.91 |
| Example 24 | 0.026 | 2.46 | 0.73 | 20.3 | 8.9 | 0.014 | 0.001 | 0.0228 | 0.022 | P: 0.36 | 1.04 |
| Example 25 | 0.421 | 1.85 | 0.98 | 18.4 | 7.9 | 0.019 | 0.001 | 0.0266 | 0.014 | Mo:0.21 | 1.90 |
| Example 26 | 0.015 | 1.56 | 1.62 | 13.9 | 26.0 | 0.002 | 0.021 | 0.0246 | 0.011 | Mo: 4.38 | 2.24 |
| Example 27 | 0.094 | 1.29 | 2.48 | 9.7 | 25.7 | 0.006 | 0.265 | 0.0192 | 0.012 | W: 0.09 | 1.60 |
| Example 28 | 0.088 | 0.20 | 3.10 | 7.3 | 29.3 | 0.004 | 0.003 | 0.0198 | 0.009 | W: 2.39 | 2.20 |
| Example 29 | 0.021 | 0.29 | 1.11 | 23.4 | 26.3 | 0.009 | 0.002 | 0.0178 | 0.008 | Cu: 0.06 | 2.23 |
| Example 30 | 0.016 | 0.91 | 1.84 | 17.5 | 21.3 | 0.022 | 0.004 | 0.0159 | 0.014 | Cu: 2.68 | 1.14 |

Table 2

| | Composition (% by weight) | | | | | | | | | | |
|---|---|---|---|---|---|---|---|---|---|---|---|
| | C | Si | Mn | Ni | Cr | N | Al | O | B | Others | [O]/[B] |
| Example 31 | 0.021 | 3.11 | 0.44 | 9.8 | 22.4 | 0.081 | 0.003 | 0.0111 | 0.008 | Ti: 1.83 | 1.39 |
| Example 32 | 0.008 | 2.84 | 0.74 | 6.3 | 17.9 | 0.068 | 0.001 | 0.0220 | 0.009 | V: 1.49 | 2.44 |
| Example 33 | 0.009 | 0.22 | 2.63 | 17.3 | 13.7 | 0.211 | 0.001 | 0.0291 | 0.023 | Nb: 1.73 | 1.27 |
| Example 34 | 0.013 | 0.42 | 1.18 | 14.9 | 18.9 | 0.191 | 0.001 | 0.0225 | 0.018 | Zr: 1.79 | 1.25 |
| Example 35 | 0.049 | 0.33 | 6.90 | 22.5 | 15.9 | 0.248 | 0.002 | 0.0416 | 0.049 | Mg: 0.0013 | 0.85 |
| Example 36 | 0.016 | 0.24 | 1.62 | 21.5 | 16.3 | 0.137 | 0.001 | 0.0338 | 0.032 | Mg: 0.0065 | 1.06 |

(continued)

| | Composition (% by weight) | | | | | | | | | | |
|---|---|---|---|---|---|---|---|---|---|---|---|
| | C | Si | Mn | Ni | Cr | N | Al | O | B | Others | [O]/[B] |
| Example 37 | 0.052 | 0.31 | 8.44 | 11.6 | 19.3 | 0.133 | 0.001 | 0.0612 | 0.029 | Ca: 0.0009 | 2.11 |
| Example 38 | 0.009 | 0.29 | 0.85 | 9.5 | 17.5 | 0.021 | 0.001 | 0.0102 | 0.007 | Ca: 0.0003 | 1.46 |
| Example 39 | 0.013 | 0.55 | 0.53 | 9.4 | 17.7 | 0.014 | 0.002 | 0.0188 | 0.021 | Ca: 0.0005 | 0.90 |
| Example 40 | 0.028 | 0.52 | 0.11 | 7.8 | 17.3 | 0.022 | 0.001 | 0.0215 | 0.014 | Ca: 0.0008 | 1.54 |
| Example 41 | 0.006 | 1.42 | 1.16 | 9.8 | 20.3 | 0.011 | 0.001 | 0.0250 | 0.016 | Ca: 0.0017 | 1.56 |
| Example 42 | 0.016 | 0.66 | 1.52 | 8.9 | 18.7 | 0.006 | 0.004 | 0.0231 | 0.029 | Ca: 0.0046 | 0.80 |
| Comparative Example 1 | 0.522 | 0.10 | 2.95 | 13.4 | 17.9 | 0.011 | 0.003 | 0.0492 | 0.021 | | 2.34 |
| Comparative Example 2 | 0.012 | 7.80 | 1.62 | 21.5 | 16.3 | 0.012 | 0.002 | 0.0338 | 0.032 | | 1.06 |
| Comparative Example 3 | 0.002 | 3.20 | 12.40 | 21.3 | 18.4 | 0.043 | 0.009 | 0.0440 | 0.022 | | 2.00 |
| Comparative Example 4 | 0.035 | 4.20 | 0.04 | 4.3 | 8.9 | 0.280 | 0.022 | 0.0600 | 0.052 | | 1.15 |
| Comparative Example 5 | 0.002 | 0.08 | 1.87 | 28.5 | 15.3 | 0.150 | 0.019 | 0.0441 | 0.039 | | 1.13 |
| Comparative Example 6 | 0.018 | 0.59 | 0.92 | 8.9 | 6.8 | 0.005 | 0.051 | 0.0224 | 0.033 | | 0.68 |
| Comparative Example 7 | 0.009 | 0.22 | 2.63 | 17.3 | 32.4 | 0.184 | 0.002 | 0.0291 | 0.021 | | 1.39 |
| Comparative Example 8 | 0.013 | 2.33 | 1.92 | 9.2 | 21.5 | 0.410 | 0.004 | 0.0118 | 0.016 | | 0.74 |
| Comparative Example 9 | 0.012 | 0.95 | 1.32 | 9.6 | 18.4 | 0.022 | 0.008 | 0.0039 | 0.004 | | 0.98 |
| Comparative Example 10 | 0.009 | 0.22 | 2.63 | 17.3 | 13.6 | 0.211 | 0.002 | 0.1031 | 0.023 | | 4.48 |
| Comparative Example 11 | 0.005 | 0.10 | 2.95 | 16.8 | 17.4 | 0.009 | 0.004 | 0.0492 | 0.002 | | 32.80 |
| Comparative Example 12 | 0.011 | 0.29 | 0.85 | 9.5 | 17.5 | 0.021 | 0.210 | 0.0215 | 0.101 | | 0.21 |
| Comparative Example 13 | 0.011 | 0.32 | 0.84 | 9.5 | 17.3 | 0.016 | 0.380 | 0.0221 | 0.023 | | 0.96 |

2. Evaluation (1)

The following evaluations were carried out on the obtained round bars.

(1) Composition of inclusion:

After the heat treatment, randomly-selected oxides (30 pieces) were subjected to a composition analysis by the use of EPMA. As the result of the composition analysis, those where B was confirmed in 15 or more pieces of the oxides are expressed by "A" and those where B was confirmed in 15 or less pieces of the oxides are expressed by "B".

(2) Oxide area ratio:

Typical microphotographs were measured by a microscope of 200 times power and all the oxide-based inclusions were extracted by colors. By means of an image processing, an area ratio of the oxide-based inclusions was measured.

(3) Corrosion resistance

A heat-treated round bar was maintained in a saline spray atmosphere for 96 hr. Subsequently, the rust generation rate was measured. Those where the rust was not found after the saline spray are expressed by "A", those where the rust area rate was less than 3% are expressed by "B", and those where the rust area rate was 3% or more are expressed by "C]", respectively.

(4) Drill perforation property:

A heat treated round bar was perforated with a SKH 51 drill (diameter : 5 mm). A grinding speed was set at 15 mm/min and a depth of a hole was set at 15 mm. The drill perforation property was evaluated by the number of holes perforated until the drill was destroyed.

(5) Grinding resistance value:

The grinding resistance value at the drill perforation test was measured.

(6) Chip fractureness:

A curl of a chip arbitrarily sampled at the time of the drill perforation property test was measured. Those where the number of curl was three or less are expressed by "A", those where the number of curl was three to ten were expressed by "B", and those where the number of curl exceeded ten are expressed by "C", respectively.

3. Result (1)

Results of the composition analysis on the materials obtained in example 1 by means of EPMA are shown in Fig. 1. From the results shown in Fig. 1, it is found that, from a position where an oxygen peak is confirmed, peaks of B and Si are also confirmed. This shows that the inclusion is an oxide containing B and Si.

In Tables 3 and 4, evaluation test results are shown.

Table 3

|  | Composition of Inclusion | Oxide Area Ratio (%) | Corrosion Resistance | Drill Perforation Property (pieces) | Grinding Resistance Value (MPa) | Chip Fractureness |
|---|---|---|---|---|---|---|
| Example 1 | A | 0.02 | A | 45 | 219 | A |
| Example 2 | A | 0.03 | A | 49 | 224 | A |
| Example 3 | A | 0.02 | A | 47 | 224 | A |
| Example 4 | A | 0.02 | A | 49 | 227 | A |
| Example 5 | A | 0.02 | A | 38 | 231 | A |
| Example 6 | A | 0.02 | A | 49 | 205 | A |
| Example 7 | A | 0.03 | A | 51 | 221 | A |

(continued)

|  | Composition of Inclusion | Oxide Area Ratio (%) | Corrosion Resistance | Drill Perforation Property (pieces) | Grinding Resistance Value (MPa) | Chip Fractureness |
|---|---|---|---|---|---|---|
| Example 8 | A | 0.02 | A | 39 | 220 | A |
| Example 9 | A | 0.02 | A | 51 | 204 | A |
| Example 10 | A | 0.03 | A | 55 | 214 | A |
| Example 11 | A | 0.02 | A | 58 | 211 | A |
| Example 12 | A | 0.02 | A | 51 | 221 | A |
| Example 13 | A | 0.02 | A | 39 | 219 | A |
| Example 14 | A | 0.02 | A | 39 | 216 | A |
| Example 15 | A | 0.03 | A | 55 | 217 | A |
| Example 16 | A | 0.02 | A | 39 | 219 | A |
| Example 17 | A | 0.03 | A | 56 | 221 | A |
| Example 18 | A | 0.02 | A | 46 | 206 | A |
| Example 19 | A | 0.03 | A | 52 | 201 | A |
| Example 20 | A | 0.03 | A | 51 | 209 | A |
| Example 21 | A | 0.03 | A | 46 | 205 | A |
| Example 22 | A | 0.03 | A | 45 | 217 | A |
| Example 23 | A | 0.02 | A | 49 | 214 | A |
| Example 24 | A | 0.02 | A | 51 | 211 | A |
| Example 25 | A | 0.03 | A | 47 | 219 | A |
| Example 26 | A | 0.02 | A | 49 | 221 | A |
| Example 27 | A | 0.02 | A | 39 | 220 | A |
| Example 28 | A | 0.02 | A | 39 | 216 | A |
| Example 29 | A | 0.02 | A | 38 | 205 | A |
| Example 30 | A | 0.02 | A | 39 | 221 | A |

Table 4

|  | Composition of Inclusion | Oxide Area Ratio (%) | Corrosion Resistance | Drill Perforation Property (pieces) | Grinding Resistance Value (MPa) | Chip Fractureness |
|---|---|---|---|---|---|---|
| Example 31 | A | 0.02 | A | 39 | 218 | A |
| Example 32 | A | 0.02 | A | 49 | 208 | A |
| Example 33 | A | 0.03 | A | 45 | 205 | A |
| Example 34 | A | 0.03 | A | 49 | 216 | A |
| Example 35 | A | 0.05 | A | 48 | 221 | A |
| Example 36 | A | 0.04 | A | 45 | 218 | A |
| Example 37 | A | 0.03 | A | 42 | 219 | A |
| Example 38 | A | 0.02 | A | 49 | 220 | A |

(continued)

|  | Composition of Inclusion | Oxide Area Ratio (%) | Corrosion Resistance | Drill Perforation Property (pieces) | Grinding Resistance Value (MPa) | Chip Fractureness |
|---|---|---|---|---|---|---|
| Example 39 | A | 0.02 | A | 52 | 217 | A |
| Example 40 | A | 0.02 | A | 53 | 215 | A |
| Example 41 | A | 0.03 | A | 55 | 210 | A |
| Example 42 | A | 0.02 | A | 57 | 206 | A |
| Comparative Example 1 | A | 0.05 | C | 44 | 220 | B |
| Comparative Example 2 | A | 0.03 | C | 43 | 211 | B |
| Comparative Example 3 | A | 0.04 | C | 44 | 216 | A |
| Comparative " Example 4 | A | 0.06 | C | 42 | 221 | A |
| Comparative Example 5 | A | 0.02 | C | 41 | 218 | B |
| Comparative Example 6 | A | 0.02 | C | 40 | 210 | B |
| Comparative Example 7 | B | 0.01 | C | 11 | 319 | C |
| Comparative Example 8 | B | 0.01 | A | 16 | 289 | C |
| Comparative Example 9 | A | 0.01 | A | 17 | 281 | B |
| Comparatrive Example 10 | B | 0.04 | B | 12 | 299 | B |
| Comparative Example 11 | B | 0.01 | C | 24 | 304 | C |
| Comparative Example 12 | A | 0.01 | C | 49 | 216 | B |
| Comparative Example 13 | B | 0.02 | A | 12 | 302 | C |

The stainless steel of Comparative Example 1 is poor in the corrosion resistance. This is because an amount of C was excessive, whereby Cr carbide was generated.

The stainless steel of Comparative Example 2 is poor in the corrosion resistance. This is because an amount of Si was excessive, whereby a σ phase remained a lot.

The stainless steel of Comparative Example 3 is poor in the corrosion resistance. This is because an amount of Mn was excessive, whereby the pitting corrosion resistance was deteriorated.

The stainless steel of Comparative Example 4 is poor in the corrosion resistance. This is because an amount ofNi was too small, whereby a corrosion resistance effect ofNi itself could not be exerted.

The stainless steel of Comparative Example 5 is poor in the corrosion resistance. This is because an amount ofNi was excessive, whereby a σ-phase remained a lot.

The stainless steel of Comparative Example 6 is poor in the corrosion resistance. This is because an amount of Cr was too small, whereby the corrosion resistance was not improved.

The stainless steel of Comparative Example 7 is poor in the corrosion resistance and the machinability. This is because an amount of Cr was excessive, whereby undissolved Cr nitride remained a lot and Cr and B formed a compound.

The stainless steel of Comparative Example 8 is poor in the machinability. This is because since an amount of N was excessive, whereby undissolved Cr nitride remained a lot and Cr and N formed a compound.

The stainless steel of Comparative Example 9 is poor in the machinability. This is because an amount of oxygen was less, whereby an amount of a B-based oxide that is effective for an improvement in the machinability was small.

The stainless steel of Comparative Example 10 is rather poor in the corrosion resistance and poor in the machinability. This is because an amount of oxygen was excessive, whereby an amount of B in the oxide became relatively small.

The stainless steel of Comparative Example 11 is poor in the corrosion resistance and the machinability. This is because the ratio of [O]/[B] was too large.

The stainless steel of c Comparative Example 12 is poor in the corrosion resistance. This is because an amount of B was excessive.

Furthermore, the stainless steel of Comparative Example 13 is poor in the machinability because an amount of A1 was excessive.

On the other hand, since the stainless steels of Examples 1 to 37 are optimized in the composition and subjected to a heat treatment in an appropriate temperature region, both the corrosion resistance and the machinability were excellent. In particular, when the amount of oxygen exceeded 0.02%, irrespective of compositions of other components, high machinability was obtained.

Furthermore, the stainless steels of Examples 38 to 42 are further improved in the machinability in comparison with those of the other stainless steels. This is considered because the addition of Ca enables the oxide having a silicate structure which contributes to the improvement in the machinability to be present more stably in the steel.

4. Evaluation (2)

The composition of Example 1 was subjected to a heat treatment at 840 to 1330°C for 1 hr. The heat-treated sample was evaluated, in accordance with the procedures same as those mentioned above, in term of the inclusion composition, oxide area ratio, corrosion resistance, drill perforation property, grinding resistance value and chip fractureness.

5. Result (2)

Results thereof are shown in Table 5. When the heat treatment temperature is lower than 1000°C, the machinability and the corrosion resistance are poor. This is considered because an oxide-based inclusion containing B is not sufficiently generated and Cr and B form a compound. Furthermore, when the heat treatment temperature exceeds 1300°C, the corrosion resistance becomes poor. This is considered because the local melting is caused, whereby a composition becomes partially uneven.

On the other hand, when the heat treatment was applied at a temperature in the range of 1000 to 1300°C, it is found that the machinability can be improved without deteriorating the corrosion resistance.

Table 5

| Heat Treatment Temperature (°C) | Composition of Inclusion | Oxide Area Ratio (%) | Corrosion Resistance | Drill Perforation Property (pieces) | Grinding Resistance Value (MPa) | Chip Fractureness |
|---|---|---|---|---|---|---|
| 840 | B | 0.02 | C | 15 | 289 | C |
| 950 | B | 0.02 | B | 18 | 292 | B |
| 1020 | A | 0.02 | A | 45 | 219 | A |
| 1060 | A | 0.02 | A | 47 | 219 | A |
| 1140 | A | 0.02 | A | 49 | 217 | A |
| 1230 | A | 0.02 | A | 50 | 214 | A |
| 1280 | A | 0.02 | A | 51 | 216 | A |
| 1330 | A | 0.02 | C | 48 | 220 | A |

The austenitic free-cutting stainless steel according to the invention can be used in marine-related instruments, beach environmental members, structural members of marine structures, members for desalination plants, members for saline heat converters, submarine cables, structural members of submarine structures, mooring ropes, aquafarming nets, bridge wires at beach sites, saline pumps, shafts, tightening members such as bolts, nuts and screws, and the like.

Furthermore, the austenitic free-cutting stainless steel according to the invention can be used in bolts, nuts, cylinder liners, shafts, hubs, connectors, bearings, laces, rails, gears, pins, screws, rolls, turbine blades, metal molds, dices, drills, valves, valve seats, cutting tools, nozzles, gaskets, rings, springs, industrial furnace members, chemical plant members, drug production members, food production members, food production device members, petroleum rig members, petroleum refining plant members, waste incinerator members, steam turbine members, gas turbine members, nuclear furnace members, aircraft members, biomass plant members and the like.

While the present invention has been described in detail and with reference to specific embodiments thereof, it will be apparent to one skilled in the art that various changes and modifications can be made therein without departing from the spirit and scope thereof.

The present application is based on Japanese Patent Application No. 2007-095799 filed on March 31, 2007 and Japanese Patent Application No. 2008-008886 filed on January 18, 2008, the contents thereof being incorporated herein by reference.

**Claims**

1. An austenitic free-cutting stainless steel, comprising:

   by weight percent,
   0.500% or less of C;
   0.01 to 5.00% of Si;
   0.01 to 10.00% of Mn;
   5.00 to 25.00% of Ni;
   7.50 to 30.00% of Cr;
   0.300% or less of N;
   more than 0.0100% but not more than 0.1000% of O;
   0.0020 to 0.1000% of B;
   0.300% or less of Al; and
   the remainder of Fe and inevitable impurities,
   said steel satisfying the following formula (1):

$$0.68 \leq [O]/[B] \leq 2.50 \qquad (1)$$

   wherein [O] represents the content of O and [B] represents the content of B.

2. The austenitic free-cutting stainless steel according to claim 1, which comprises an oxide-based inclusion containing B dispersed therein.

3. The austenitic free-cutting stainless steel according to claim 2, wherein the oxide-based inclusion further contains Si.

4. The austenitic free-cutting stainless steel according to any one of claims 1 to 3, wherein, by weight percent,

   0.100% or less of C,
   0.01 to 3.00% of Si,
   15.00 to 25.00% of Cr,
   0.100 or less of N,
   more than 0.0100% but not more than 0.0500% of O, and
   0.0080 to 0.1000% of B
   are contained in said steel.

5. The austenitic free-cutting stainless steel according to any one of claims 1 to 4, wherein, by weight percent,

0.050% or less ofN,
more than 0.0100% but not more than 0.0500% of O, and
0.0120 to 0.0800% of B
are contained in said steel.

6. The austenitic free-cutting stainless steel according to any one of claims 1 to 5, further comprising:

   at least one kind selected from the group consisting of a sulfide, a nitride, a carbosulfide and a selenide.

7. The austenitic free-cutting stainless steel according to any one of claims 1 to 6, further comprising:

   by weight percent,
   at least one kind selected from the group consisting of
   0.01 to 0.50% of S, and
   0.01 to 0.50% of Se.

8. The austenitic free-cutting stainless steel according to any one of claims 1 to 7, further comprising:

   by weight percent,
   at least one kind selected from the group consisting of
   0.01 to 0.40% ofPb,
   0.01 to 0.40% of Bi,
   0.01 to 0.40% of Te,
   0.01 to 0.40% of Sn, and
   0.01 to 0.40% of P.

9. The austenitic free-cutting stainless steel according to any one of claims 1 to 8, further comprising:

   by weight percent,
   at least one kind selected from the group consisting of
   0.01 to 8.00% of Mo,
   0.01 to 4.00% of W, and
   0.01 to 5.00% of Cu.

10. The austenitic free-cutting stainless steel according to any one of claims 1 to 9, further comprising:

    by weight percent,
    at least one kind selected from the group consisting of
    0.01 to 2.00% of Ti,
    0.01 to 2.00% of V,
    0.01 to 2.00% ofNb, and
    0.01 to 2.00% of Zr.

11. The austenitic free-cutting stainless steel according to any one of claims 1 to 10, further comprising:

    by weight percent,
    at least one kind selected from the group consisting of
    0.0001 to 0.0100% of Mg, and
    0.0001 to 0.0100% of Ca.

12. The austenitic free-cutting stainless steel according to any one of claims 1 to 11, which is obtained by a heat treatment conducted at a temperature in the range of 1000 to 1300°C for a period of 5 min to 24 hr.

13. A process for producing an austenitic free-cutting stainless steel, which comprises:

    preparing a steel comprising:

    by weight percent,

0.500% or less of C,
0.01 to 5.00% of Si,
0.01 to 10.00% of Mn,
5.00 to 25.00% of Ni,
7.50 to 30.00% of Cr,
0.300% or less ofN,
more than 0.0100% but not more than 0.1000% of O,
0.0020 to 0.1000% of B,
0.300% or less of Al, and
the remainder of Fe and inevitable impurities,
said steel satisfying the following formula (1):

$$0.68 \leq [O]/[B] \leq 2.50 \qquad (1)$$

wherein [O] represents the content of O and [B] represents the content ofB; melting and casting the steel; and subjecting the steel to a heat treatment conducted at a temperature in the range of 1000 to 1300°C for a period of 5 min to 24 hr.

## Fig. 1

| B | O | Si |
|---|---|---|
| | | |

**European Patent
Office**

**EUROPEAN SEARCH REPORT**

Application Number

EP 08 00 6557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 62 030859 A (DAIDO STEEL CO LTD) 9 February 1987 (1987-02-09) * pages 2-5; example 1; tables 1,2 * | 1-13 | INV. C22C38/54 C22C38/58 C21D6/00 |
| A | JP 02 209454 A (NIPPON KOKAN KK) 20 August 1990 (1990-08-20) * abstract * | 1-13 | |
| A | JP 2004 176078 A (SANYO SPECIAL STEEL CO LTD) 24 June 2004 (2004-06-24) * abstract * | 1-13 | |
| A | JP 2004 176080 A (CITIZEN WATCH CO LTD) 24 June 2004 (2004-06-24) * abstract * | 1-13 | |
| A | JP 2004 231984 A (NIPPON STEEL CORP) 19 August 2004 (2004-08-19) * abstract * | 1-13 | |

TECHNICAL FIELDS
SEARCHED    (IPC)

C22C
C21D

The present search report has been drawn up for all claims

| Place of search | Date of completion of the search | Examiner |
|---|---|---|
| The Hague | 16 June 2008 | Chebeleu, Alice |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 00 6557

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2008

| Patent document cited in search report | | Publication date | Patent family member(s) | | Publication date |
|---|---|---|---|---|---|
| JP 62030859 | A | 09-02-1987 | JP<br>JP | 1919905 C<br>6047709 B | 07-04-1995<br>22-06-1994 |
| JP 2209454 | A | 20-08-1990 | NONE | | |
| JP 2004176078 | A | 24-06-2004 | JP | 3958193 B2 | 15-08-2007 |
| JP 2004176080 | A | 24-06-2004 | NONE | | |
| JP 2004231984 | A | 19-08-2004 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 62278252 A
- JP 62030860 A
- JP 2007095799 A
- JP 2008008886 A